# EUROPEAN PATENT APPLICATION

(11) **EP 3 050 853 A1**
(43) Date of publication of application: **03.08.2016**
(21) Application number: 15152980.7
(22) Date of filing: 29.01.2015
(51) Int. Cl.: C02F 1/72, C02F 101/18, C02F 101/20, C02F 101/38, C02F 103/16

(54) **Method for removing cyanide compounds from wastewater**

(71) Applicant: Universiteit van Amsterdam, 1012 WX Amsterdam (NL)
(72) Inventor: Oulego Blanco, Paula, C.P. 33006 Oviedo (Asturias) (ES); Shiju, Nirappurackal Raveendran, 1185 AX Amstelveen (NL); Rothenberg, Gad, 2341 NV Oegstgeest (NL)
(74) Representative: Hesselink, Dinah Elisabeth

(57) **Abstract**

The invention pertains to a method for reduction of the cyanide content of a metals-containing wastewater fraction by contacting a wastewater fraction comprising cyanide compounds and metal compounds, with a metals content of at least 100 ppm, with hydrogen peroxide and a solid catalyst comprising at least 50 wt.% of a copper salt with a solubility of less than 10 exp(-5) mol/liter (in water at 20°C, 1 atm).

It has been found that when a solid catalyst comprising at least 50 wt.% of a copper salt with a solubility of less than 10 exp(-5) mol/liter (in water at 20°C, 1 atm) is used in combination with hydrogen peroxide in the reduction of the cyanide content of a cyanide compound-containing wastewater fraction having a metal compound content of at least 100 ppm, a method is obtained which shows an efficient removal of cyanide compounds from a difficult to treat fraction.

## Description

The present invention pertains to a method for removing cyanide compounds from wastewater, in particular from wastewater also containing metal compounds.

The presence of cyanide species (including free cyanide and metal-complex cyanides) in industrial effluents is an important environmental issue due to the acute toxicity of cyanide for human beings and living organisms, even at low concentrations. Aquatic organisms, especially fish and aquatic invertebrates, are very sensitive to cyanide exposure and concentrations in the range of 20 to 76 µg/L can cause the death of these species. Consequently, effluents polluted with cyanide compounds must be treated before their release into the environment.

It has been found that wastewater which contains substantial amounts of metal components, in particular wastewater derived from steel mills, presents a particular challenge. This is because these wastewater fractions can have varying cyanide concentrations. Further, the fractions are high volume, which means that care should be taken that the process is economically viable in large scale operation. Additionally, the wastewater fraction contains substantial amounts of other contaminants which may interfere with the cyanide removal.

Accordingly, there is need in the art for a method for removing cyanide compounds from wastewater fractions containing such cyanide compounds which is suitable for the treatment of wastewater fractions containing substantial amounts of metal compounds. Additionally, the method should be suitable for treatment of feeds containing substantial amounts of solid components, and should be able to handle large volumes of liquid in an economically attractive manner. The present invention provides such a method.

The present invention pertains to a method for reduction of the cyanide content of a metals-containing wastewater fraction by contacting a wastewater fraction comprising cyanide compounds and metal compounds, with a metals content of at least 100 ppm, with hydrogen peroxide and a solid catalyst comprising at least 50 wt.% of a copper salt with a solubility of less than 10 exp(-5) mol/liter (in water at 20°C, 1 atm).

It has been found that when a solid catalyst comprising at least 50 wt.% of a copper salt with a solubility of less than 10 exp(-5) mol/liter (in water at 20°C, 1 atm) is used in combination with hydrogen peroxide in the reduction of the cyanide content of a cyanide compound-containing wastewater fraction having a metal compound content of at least 100 ppm, a method is obtained which shows an efficient removal of cyanide compounds from a difficult to treat fraction. Further advantages of the method according to the invention and specific embodiments thereof will become clear from the further specification.

The method according to the invention will be discussed in more detail below.

The feedstock used in the method according to the invention is an aqueous medium comprising cyanide compounds, metal compounds, and optionally further compounds as will be discussed below. It can be derived from various sources.
The method according to the invention is particularly suitable for treatment of wastewater originating from steel mills. This wastewater exists in large volumes, can contain varying amounts of cyanide compounds, and contains numerous other contaminants, such as relatively large amounts of metal compounds and solid compounds. This makes feedstocks of this type hard to treat.

The feedstock in the method according to the invention comprises cyanide. Cyanide may be present as free cyanide ions (CN-), or in the form of bonded cyanide, which in the context of the present specification is the total cyanide minus the free cyanide. Bonded cyanide may, e.g., be in the form of (weak or strong) metal complexes such as zinc cyanide.

The total cyanide content can vary within wide ranges, e.g., in the range of 0.05-200 ppm. In some embodiments, the total cyanide content is in the range of 0.1-50 ppm, more specifically 0.5-15 ppm.
The free cyanide content can vary within wide ranges, e.g., in the range of 0.02 to 100 ppm. In some embodiments, the free cyanide content is in the range of 0.05 to 25 ppm, in some embodiments 0.25 to 10 ppm.
Total cyanide and free cyanide can be determined using ISO 14403:2002 by continuous flow analysis.

The wastewater fraction used as feedstock in the present invention comprises at least 100 ppm of metal compounds. The metals content can be determined in accordance with ISO 11885:2007, which specifies a method for the determination of dissolved metals, metals bound to particles, and total metals. In the present specification, when reference is made to the metals content of a water fraction, total metals content is intended, unless it is specified that something else is meant.
It is a particular feature of the present invention that such metals-containing feedstocks can be treated. Feedstocks of this type cannot be treated using catalysts comprising ion exchange resins, zeolites, or high surface area adsorbents, as the presence of substantial amounts of metals will detrimentally affect the properties of these materials.
The metal compound content of the wastewater fraction treated according to the invention can vary within wide ranges. As a maximum, a value of 5000 ppm may be mentioned.

In one embodiment of the present invention, in particular where the water fraction is derived from a steel mill, the feedstock can contain substantial amounts of iron compounds, e.g., at least 20 ppm, in particular at least 50 ppm. Iron compound content can be determined using ISO 11885:2007. As a maximum, a value of 5000 ppm may be mentioned.

In one embodiment, the wastewater fraction to be treated has a total solids content of at least 200 ppm, in particular at least 500 ppm. It is a feature of the method according to the invention that feedstocks with a total solids content in this range can be treated successfully. Total solids content can be determined according to UNE 77030:2002, which method encompasses evaporating a known volume of sample and drying the residue obtained in the oven at 105°C until the weight is constant. The value of total residue is expressed in ppm. This parameter allows determining the total content of nonvolatile solids contained in the wastewater. As a maximum value for the total solids content, a value of 10000 ppm may be mentioned. it may be preferred for the total solids content to be at most 5000 ppm.

The suspended solid content of the wastewater fraction treated with the method according to the invention may vary within wide ranges. In one embodiment the suspended solid content is in the range of 0 to 50 ppm. However, the suspended solid content may also be higher, e.g., at least 50 ppm, or at least 100 ppm. In some embodiments, the suspended solid content may be even higher, e.g., at least 500 ppm, or even at least 1000 ppm. As a maximum value, depending on the source of the feedstock, a value of 20 000 ppm, or 10 000 ppm, or 5000 ppm may be mentioned.
Suspended solids are determined according to ISO 11923:1997 by vacuum or pressure filtration of a known volume of wastewater using a borosilicate glassfibre filter. The dried residue retained in the filter is indicated as the suspended solids (in ppm). This parameter indicates the amount of sludge produced in a primary settlement tank.

The feedstock treated with the method according to the invention may contain a substantial amount of complex organic components, such as aromatic components like benzene, naphthalene, anthracene, phenols, cresols, and polycyclic aromatic hydrocarbons. It has been found that in the method according to the invention cyanide removal is possible from feedstocks comprising these types of compounds. This is not the case when use is made of compounds like ion exchange resins. The load of organic compounds can be determined by measuring the chemical oxygen demand (COD). COD can be determined colorimetrically at 600 nm via the dichromate method, in accordance with Standard Methods 5520-COD, in particular 5520-D.
In one embodiment, the wastewater fraction treated with the method according to the invention has a COD of at least 20 mg O2/L. Depending on the nature of the feedstock, the COD may be much higher, e.g., in the range of 700 mg O2/L to 10000 mg O2/L. These ranges would, e.g., be applicable for wastewater from coke ovens.

The wastewater feedstock treated in accordance with the method according to the invention generally has a pH in the alkaline range of above 7, more specifically above 8, sometimes above 9. As a maximum value a pH of at most 14 may be mentioned, in particular at most 13, in some embodiments at most 12. If necessary, the pH of the wastewater fraction can be adjusted as desired.

In the method according to the invention the wastewater fraction is contacted with hydrogen peroxide and a solid catalyst.
The amount of hydrogen peroxide provided is generally matched to the amount of cyanide compounds present in the system. In general, the molar ratio of hydrogen peroxide to cyanide is in the range of 1-20:1. If the amount of hydrogen peroxide is too low, the cyanide will not be removed completely. On the other hand, while the addition of a limited excess of H2O2 may be advantageous to increase the reaction rate, a large excess will not further increase the reaction rate, but will lead to additional costs.
Suitable means for providing the hydrogen peroxide will be clear to the skilled person. In one embodiment, the hydrogen peroxide is provided in the form of an aqueous solution, e.g., in a concentration of 10-50 wt.%.
In one embodiment, the hydrogen peroxide is provided over a longer period of time, intermittently or continuously. This creates a steady state concentration of hydrogen peroxide in the reaction mixture. This may be advantageous as it may reduce undesired decomposition of hydrogen peroxide. Undesired decomposition of hydrogen peroxide is defined as decomposition of hydrogen peroxide by other reactions than reactions with cyanide compounds. The addition of hydrogen peroxide over a longer period of time is known in the art for reactions where hydrogen peroxide is used as oxidizing agent. It is within the scope of the skilled person to determine the concentration of hydrogen peroxide and the addition rate which will minimize the unproductive loss of hydrogen peroxide due to reactions with compounds other than the cyanide compounds, especially where there are limited amounts of catalyst.

The reaction is carried out in the presence of a solid catalyst comprising at least 50 wt.% of a copper salt with a solubility of less than 10 exp(-5) mol/liter (in water at 20°C, 1 atm).
It is a feature of the present invention that the solid catalyst comprises at least 50 wt.% of a copper salt as specified. This is different from the systems where a material is used comprising copper on, e.g., an ion exchange resin or a zeolite. It is preferred for the solid catalyst to comprise at least 70 wt.%, more in particular at least 80 wt.%, still more in particular at least 90 wt.%, even more in particular at least 95 wt.% of copper salt as specified. Other components which may be present include binders.

The copper salt used in the present invention has a solubility of less than 10 exp(-5) mol/liter (in water at 20°C, 1 atm). This is a difference with systems wherein soluble copper salts are used. It is preferred for the copper salt to have a solubility of less than 10 exp(-7) mol/liter (in water at 20°C, 1 atm), or even a solubility of less than 10 exp(-10) mol/liter (in water at 20°C, 1 atm).

The copper salt may be a copper(I) salt, a copper(II) salt, or a copper(III) salt. It is within the scope of the skilled person to select salts with a suitable solubility. Mixtures of salts may of course be used.
It is preferred for the copper salt to comprise copper oxide (i.e. copper(I)oxide, copper(II)oxide, copper(III)oxide, or combinations thereof), copper hydroxide (i.e. copper(I)hydroxide, copper(II)hydroxide, copper(III)hydroxide, or combinations thereof) or combinations of copper oxide and copper hydroxide. Copper oxide and copper hydroxide have been found to combine a high activity with a high availability. It is preferred for the copper salt to consist for at least 50 wt.% of copper oxide, copper hydroxide, or a combination thereof, in particular at least 70 wt.%, more in particular at least 80 wt.%, still more in particular at least 90 wt.%, even more in particular at least 95 wt.%.
It is preferred for the copper in the copper salt, thus preferably in the copper oxide and/or hydroxide, as it is added to the process to be for at least 50 mol% Cu(II), as it is believed that this is the active component. It is particularly preferred for the copper as it is added to the process to be for at least 70 mol% Cu(II), in particular at least 80 mol% Cu(II).

The catalyst is provided in solid form. The amount of catalyst provided to the process may vary within wide ranges. It can range, e.g., between 0.1 and 15 wt.%, calculated on the amount of wastewater feedstock. The addition of more catalyst will lead to an increased reaction rate, but will also increase costs. A range of 0.5 to 5 wt.% may be considered preferred.

The method according to the invention can be carried out in batch, continuous, or semicontinuous. It is within the scope of the skilled person to select a suitable embodiment.

The wastewater can be contacted with the catalyst in fixed bed operation, in moving bed operation, or in slurry operation. While all methods above are suitable in principle, slurry operation may be preferred, because it allows contacting a large amount of wastewater with a limited amount of catalyst.

The pressure applied in the method according to the invention is not critical. Atmospheric pressure is suitable. If so desired, a pressure above atmospheric pressure, e.g., up to 10 atm can be used, or a reduced pressure, e.g. between 0.5 and 1 atm.

The temperature applied in the method according to the invention is also not critical as long as it is between 0 and 100°C at atmospheric pressure. A suitable temperature will in particular be determined by the starting temperature of the wastewater stream. In general, the temperature will be between 2 and 90°C, in particular between 5 and 60°C, more in particular between 20 and 50°C.

The reaction time will depend on the cyanide concentration, the hydrogen peroxide concentration and the amount of catalyst, where increasing the amounts for each of these components will lead to an increase in reaction rate. When the circumstances are selected properly, a reduction of the cyanide concentration of more than 50% can be obtained in less than 10 minutes.

The method according to the invention makes it possible to obtain total cyanide concentrations in wastewater of less than 100 microgram/l (0.1 ppm), and in some circumstances less than 50 microgram/liter, or even less than 20 microgram/liter. The total cyanide concentration in the product wastewater can be decreased by the (continuous or periodic) addition of more hydrogen peroxide and more catalyst during the reaction, and increasing the reaction time.
Depending on the starting concentration, it is possible for the cyanide concentration in the product to be reduced with at least 80%, in particular at least 90%, more in particular at least 95%, more in particular at least 99%, in some embodiments even at least 99.9%.

It will be clear to the skilled person that the various embodiments and preferences described herein can be combined, unless they are presented as mutually excluding alternatives.

The invention will be elucidated by the following examples, without being limited thereto or thereby.

### Example 1: Cyanide removal from synthetic wastewater - effect of the presence of catalyst

To investigate the effect of the present invention, a synthetic "wastewater" was prepared by adding a concentrated solution of potassium cyanide (prepared from KCN >97% purity) to distilled water brought to pH 11.5 using NaOH at 40°C. The synthetic wastewater had a concentration of 105 ppm of cyanide (free cyanide ions).

To 150 ml synthetic wastewater 3.5 mg of copper (II) oxide was added as catalyst to a concentration of 23.3 ppm. Hydrogen peroxide was added in an amount of 1 equivalent per equivalent cyanide initially present in the system, at each of t=0, t=15 minutes, t=30 minutes, and t=45 minutes. The initial hydrogen peroxide concentration was 137.3 ppm (1 equivalent of H2O2 per equivalent of CN-). Reaction temperature was 40°C. Reaction pressure was atmospheric.

A comparative example was carried out under the same conditions, but in the absence of copper (II) oxide as catalyst.

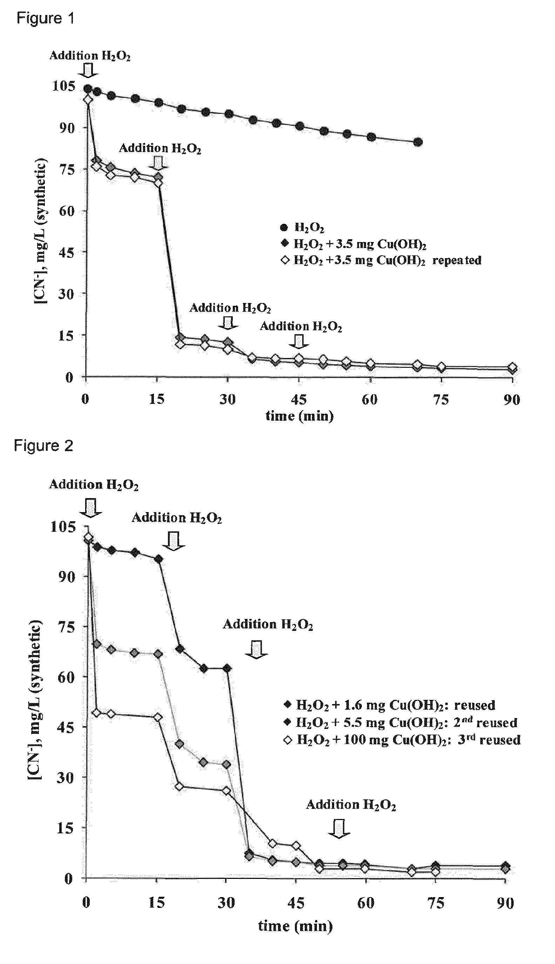

The results are provided in Figure 1, where the data marked with (●) are obtained in the absence of the copper (II) oxide catalyst, and the data marked with (◆,◆) represent two series obtained in the presence of catalyst.

It is clear from Figure 1 that the presence of the copper (II) oxide catalyst results in a much improved cyanide removal. In the comparative example, only 16% conversion is obtained after 60 minutes. In the examples according to the invention 95% conversion is obtained in the same time period.

### Example 2: Cyanide removal from synthetic wastewater - effect of the amount of catalyst

A further experiment was set up under the conditions of Example 1, except that different amounts of catalyst were used, namely 1.6 mg (10.7 ppm), 5.5 mg (36.7 ppm), and 100 mg (66.7 ppm). The catalyst had been used earlier in the removal of cyanide from wastewater fractions under comparable conditions and had been isolated by filtration. The 1.6 mg batch had been used three times before, the 5.5 mg batch had been used two times before, and the 100 mg batch had been used once before.

The results are presented in Figure 2. It can be seen that all experiments result in the same end concentration of cyanide, but that experiments wherein larger amounts of catalyst are used show a higher initial decrease in cyanide concentration. It is believed that the addition of larger amounts of H2O2 would result in a decrease in end concentration.

### Example 3: Cyanide removal from synthetic waste water-effect of the reuse of catalyst

A further experiment was set up under the conditions of Example 1. Four experiments were carried out, each using 1.6 mg (10.7 ppm) of catalyst. The experiments differed in the number of times the catalyst had been used before. In each case, the catalyst which had been used before had been isolated by filtration and dried under mild conditions (40°C) before it was reused.
Operating conditions were as follows: initial cyanide concentration = 105 ppm, initial hydrogen peroxide concentration = 137.3 ppm, T = 40°C, P = 1 atm and pH = 11.5.

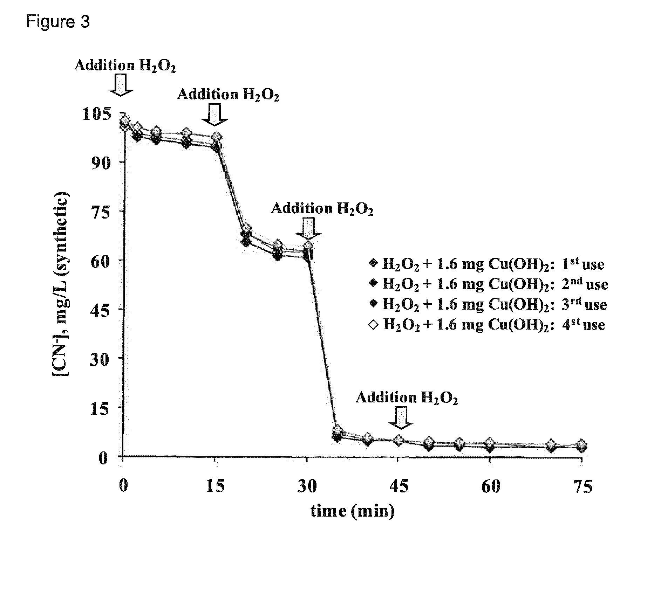

The results are presented in Figure 3. In this figure, (◆black) represents the data obtained with the catalyst during its 1^{st} use, (◆dark grey) represents the data obtained with the catalyst during its 2^{nd} use, (◆light grey) represents the data obtained with the catalyst during its 3^{rd} use, and (◆white) represents the data obtained with the catalyst during its 4^{th} use (last) use.
From Figure 3 it can be seen that the four experiments result in practically the same end concentration of cyanide, irrespective of the number of times that the catalyst had been used. Cyanide removals above 95% were obtained in the same time period in all cases.

## Claims

1. Method for reduction of the cyanide content of a metals-containing wastewater fraction by contacting a wastewater fraction comprising cyanide compounds and metal compounds, with a metals content of at least 100 ppm, with hydrogen peroxide and a solid catalyst comprising at least 50 wt.% of a copper salt with a solubility of less than 10 exp(-5) mol/liter (in water at 20°C, 1 atm).

2. Method according to claim 1, wherein the total cyanide content of the wastewater fraction is in the range of 0.05-200 ppm, in particular in the range of 1-15 ppm.

3. Method according to claim 1 or 2, wherein the wastewater fraction has an iron content of at least 20 ppm, in particular at least 50 ppm.

4. Method according to any one of the preceding claims, wherein the wastewater fraction has a solids content of at least 200 ppm, in particular at least 500 ppm, more in particular in the range of 500-5000 ppm.

5. Method according to any one of the preceding claims, wherein the wastewater fraction has a COD of at least 20 mg O2/L.

6. Method according to any one of the preceding claims, wherein the wastewater fraction has a pH above 7, more specifically above 8, sometimes above 9 and/or a pH of at most 14, in particular at most 13, in some embodiments at most 12.

7. Method according to any one of the preceding claims, wherein hydrogen peroxide is provided in an amount such that the molar ratio of hydrogen peroxide to cyanide is in the range of 1-20:1.

8. Method according to any one of the preceding claims, wherein the solid catalyst comprises at least 70 wt.%, more in particular at least 80 wt.%, still more in particular at least 90 wt.%, even more in particular at least 95 wt.% of copper salt with a solubility of less than 10 exp(-5) mol/liter (in water at 20°C, 1 atm), in particular a solubility of less than 10 exp(-7) mol/liter (in water at 20°C, 1 atm), more in particular a solubility of less than 10 exp(-10) mol/liter (in water at 20°C, 1 atm).

9. Method according to any one of the preceding claims, wherein the copper salt comprises copper oxide, copper hydroxide or combinations thereof.

10. Method according to claim 9, wherein the copper salt consists for at least 50 wt.% of copper oxide, copper hydroxide, or a combination thereof, in particular at least 70 wt.%, more in particular at least 80 wt.%, still more in particular at least 90 wt.%, even more in particular at least 95 wt.%.

11. Method according to any one of the preceding claims, wherein the copper in the copper salt, thus preferably in the copper oxide and/or hydroxide, as it is added to the process is for at least 50 mol% Cu(II), in particular at least 70 mol% Cu(II), in particular at least 80 mol% Cu(II).

12. Method according to any one of the preceding claims, wherein the catalyst is present in an amount of 0.1 and 10 wt.%, calculated on the amount of wastewater feedstock, in particular 0.5 to 5 wt.%.

13. Method according to any one of the preceding claims, wherein the wastewater fraction is contacted with the catalyst in fixed bed operation, in moving bed operation, or in slurry operation, in particular in slurry operation.

14. Method according to any one of the preceding claims, wherein a wastewater is obtained with a cyanide concentration of less than 100 microgram/l (0.1 ppm), in particular less than 50 microgram/liter, more in particular less than 20 microgram/liter.

15. Method according to any one of the preceding claims, wherein the cyanide concentration in the product wastewater is reduced with at least 80%, in particular at least 90%, more in particular at least 95%, more in particular at least 99%, in some embodiments even at least 99.9% as compared to the cyanide content of the starting wastewater.
